# EUROPÄISCHE PATENTSCHRIFT

(11) **EP 0 706 032 B1**
(45) Veröffentlichungstag und Bekanntmachung des Hinweises auf die Patenterteilung: **28.05.1997**
(21) Anmeldenummer: 95115859.1
(22) Anmeldetag: 09.10.1995
(51) Int. Cl.: G01F 1/84

(54) **Messgerät für strömende Medien**
Measuring apparatus for flowing fluids
Instrument de mesure pour des fluides en écoulement

(30) Priorität: 07.10.1994 DE 4435809
(43) Veröffentlichungstag der Anmeldung: 10.04.1996
(73) Patentinhaber: KROHNE MESSTECHNIK GMBH & CO. KG, D-47058 Duisburg (DE)
(72) Erfinder: van der Pol, Roland Dipl.-Ing., NL-5924 AK Venlo (NL)
(74) Vertreter: Patentanwälte Gesthuysen, von Rohr, Weidener, Schüll, Häckel

(56) Entgegenhaltungen:
- EP-A- 0 275 367
- EP-A- 0 448 913
- GB-A- 2 221 302
- AUTOMATISIERUNGSTECHNISCHE PRAXIS - ATP, Bd. 34, Nr. 3, März 1992 MUNCHEN DE, Seiten 123-127, XP 000270859 ARMIN BRUCKER ET AL. 'Tendenzen bei der Messung von Durchfluss'

## Beschreibung

Die Erfindung betrifft ein Meßgerät für strömende Medien, das vorzugsweise nach dem Coriolis-Prinzip arbeitet, mit mindestens einer das strömende Medium führenden Leitung, mit mindestens einem auf die Leitung einwirkenden Schwingungserzeuger und mit mindestens einem vorzugsweise Coriolis-Kräfte und/oder auf Coriolis-Kräften beruhende Coriolis-Schwingungen erfassenden Meßwertaufnehmer.

Meßgeräte für strömende Medien der beschriebenen Art werden sowohl zur Dichtemessung des strömenden Mediums als auch, wie bereits angesprochen, zur Bestimmung des Massendurchflusses des strömenden Mediums nach dem Coriolis-Prinzip eingesetzt. Im folgenden wird stets von Massendurchflußmeßgeräten für strömende Medien, die nach dem Coriolis-Prinzip arbeiten, die Rede sein, ohne daß dies als Beschränkung aufzufassen ist.

Massendurchflußmeßgeräte für strömende Medien, die nach dem Coriolis-Prinzip arbeiten, sind in verschiedenen Ausführungen bekannt (vgl. die deutschen Offenlegungsschriften 26 29 833, 28 22 087, 28 33 037, 29 38 498, 30 07 361, 33 29 544, 34 43 234, 35 03 841, 35 05 166, 35 26 297, 37 07 777, 39 16 285, 40 16 207, 41 24 295, 41 43 361, 42 00 060, 43 27 052, 44 13 239, 44 17 332, 44 17 516 und 44 23 168, die europäischen Offenlegungsschriften 0 083 144, 0 109 218, 0 119 638, 0 196 150, 0 210 308, 0 212 782. 0 232 679, 0 235 274, 0 243 468, 0 244 692, 0 271 605, 0 275 367 und 0 282 552 die französische Offenlegungsschrift 2 598 801 sowie die USA-Patentschriften 4,491,009, 4,628,744, 4,666,410, 4,803,867 und 4,962,678) und finden in zunehmendem Maße Verwendung.

Allen Massendurchflußmeßgeräten, die nach dem Coriolis-Prinzip arbeiten, ist gemeinsam, daß die durch den Massendurchfluß verursachten und auszuwertenden Coriolis-Kräfte in Relation zu den anderen an der Bewegung der Leitung beteiligten Kräften sehr klein sind. Dies führt dazu, daß die Coriolis-Kräfte die Grundbewegung nur geringfügig ändern. Bei den bekannten Massendurchflußmeßgeräten wird die Grundbewegung der Leitung außer durch die Coriolis-Kräfte durch verschiedene andere Einflüsse verändert. Solche Veränderungen treten beispielsweise durch die bei allen bekannten Massendurchflußmeßgeräten an der Leitung befestigten Meßwertaufnehmer und Schwingungserzeuger auf. Diese an der Leitung angebrachten zusätzlichen Massen verringern einerseits durch ihre eigene Masse den Einfluß der Coriolis-Kräfte auf die Bewegung der Leitung und führen andererseits dazu, daß die Leitungen durch die Anbringung der Massen, zum Beispiel durch Löten oder Schweißen, mechanisch unzureichend definiert verändert werden. Beide Einflüsse führen zu einer Verringerung des Meßeffektes, einer geringeren Meßgenauigkeit und einem schwer definierbaren Langzeitverhalten und spielen insbesondere bei Massendurchflußmeßgeräten geringen Nennmassendurchflusses, also kleiner Bauform und damit geringer Leitungsmasse eine Rolle. Insbesondere führt eine hohe Masse der Leitung inkl. Anbauten, also des schwingungsfähigen Systems, zu einer niedrigeren Resonanzfrequenz, gleichbedeutend mit geringeren Coriolis-Kräften und damit einem reduzierten Meßeffekt. Darüber hinaus sind bei symmetrisch an der Leitung angebrachten Massen, wie beispielsweise im allgemeinen den Meßwertaufnehmern, sehr genaue mechanische Toleranzen einzuhalten. Diese Forderung führt zu einer aufwendigen Fertigung.

Der Erfindung liegt somit die Aufgabe zugrunde, die bekannten Meßgeräte für strömende Medien derart auszugestalten, daß die das strömende Medium führenden Leitungen weitgehend frei von schwer definierbaren Einflüssen mit geringer Masse herstellbar sind.

Erfindungsgemäß wird die zuvor aufgezeigte Aufgabe dadurch gelöst, daß ein von einer Spannungsquelle gelieferter elektrischer Strom zumindest abschnittsweise die Leitung und/oder das strömende Medium durchfließt. Durch die erfindungsgemäße Maßnahme ist gewährleistet, daß sich in der Umgebung der Leitung des Meßgerätes ein Magnetfeld ausbildet, welches eine berührungslose Erregung und Erfassung der Bewegung der Leitung ohne Anbauten ermöglicht.

Eine erste Weiterbildung erfährt das erfindungsgemäße Meßgerät dadurch, daß die Leitung über einen von dem durch die Leitung und/oder das strömende Medium fließenden elektrischen Strom und ein die Leitung zumindest abschnittsweise umgebendes externes Magnetfeld gebildeten Schwingungserzeuger anregbar ist. Diese Maßnahme ermöglicht eine berührungslose Erregung der Leitung durch das Zusammenwirken des von dem durch die Leitung und das evtl. leitfähige strömende Medium fließenden elektrischen Stroms hervorgerufenen Magnetfelds und des externen Magnetfeldes. Es erübrigt sich also die Anbringung eines Teils eines, wie auch immer gearteten Schwingungserzeugers an der Leitung, so daß der Schwingungserzeuger weder die Masse der Leitung noch ihre mechanischen Eigenschaften verändert.

Damit die Leitung schwingt, was bekanntlich zur Messung des Massendurchflusses oder der Dichte des strömenden Mediums notwendig ist, kann entweder das externe Magnetfeld ein Wechselfeld und der elektrische Strom eine Gleichstrom oder das externe Magnetfeld ein Gleichfeld und der elektrische Strom ein Wechselstrom oder schließlich das externe Magnetfeld ein Wechselfeld und der elektrische Strom ein Wechselstrom mit gleicher Frequenz wie das Wechselfeld sein.

Der elektrische Stromfluß durch die Leitung wird besonders vorteilhaft dadurch eingekoppelt, daß die Enden der Leitung über ein Meßgerätgehäuse und/oder Erde kurzgeschlossen sind und daß der elektrische Strom durch die Leitung nach dem Transformatorprinzip in die Leitung einkoppelbar ist. Somit ist gewährleistet, daß der elektrische Strom galvanisch entkoppelt in der Leitung induziert wird, daß heißt keine Anschlußkontakte zwischen der Leitung und einer Stromquelle notwendig sind. Diese Maßnahme setzt selbstverständlich voraus, daß in der Leitung ein Wechselstrom induziert werden soll.

Weiter ist das Meßgerät dadurch ausgestaltet, daß die Bewegung der Leitung über einen von dem durch die Leitung und/oder das strömende Medium fließenden elektrischen Strom und eine in der Nähe der Leitung angeordnete Spule gebildeten Meßwertaufnehmer erfaßbar ist. Diese Ausgestaltung des erfindungsgemäßen Meßgerätes führt dazu, daß auch die Meßwertaufnahme berührungslos erfolgt und somit gewährleistet ist, daß keine die Bewegung und die mechanischen Eigenschaften der Leitung beeinflussenden Massen an der Leitung angebracht werden müssen.

Schließlich erfährt das erfindungsgemäße Meßgerät eine Weiterbildung dadurch, daß die Leitung aus einem von außen mit einem leitfähigen Material beschichtetem isolierendem Material besteht. Eine solche Maßnahme gewährleistet es, daß der elektrische Strom nicht durch das strömende Medium fließt. Dies ist je nach strömendem Medium aus galvanischen Gründung vorteilhaft.

Im folgenden wird das erfindungsgemäße Meßgerät für strömende Medien anhand einer lediglich Ausführungsbeispiele darstellenden Zeichnung erläutert. In der Zeichnung zeigen
- Fig. 1: einen Abschnitt einer Leitung eines erfindungsgemäßen Meßgeräts mit einer daran angeschlossenen Wechselspannungsquelle,
- Fig. 2: den in Fig. 1 dargestellten Leitungsabschnitt im Schnitt mit angedeutetem Feldlinienverlauf des Magnetfeldes,
- Fig. 3: den Verlauf des Magnetfeldes in Abhängigkeit des Abstandes von der Leitung,
- Fig. 4: einen Leitungsabschnitt des erfindungsgemäßen Meßgerätes mit umgebendem externen Magnetfeld,
- Fig. 5: die Phasenlage mehrerer physikalischer Größen während einer Bewegung der Leitung ohne Dämpfung,
- Fig. 6: ein Meßgerät bei dem der elektrische Strom nach dem Transformatorprinzip in die Leitung eingekoppelt wird,
- Fig. 7: ein Ersatzschaltbild für den elektrischen Stromfluß bei dem in Fig. 6 dargestellten erfindungsgemäßen Meßgerätes,
- Fig. 8: das in Fig. 7 dargestellte Ersatzschaltbild reduziert auf die elektrischen Gesichtspunkte,
- Fig. 9: schematisch ein Ausführungsbeispiel einer Spule zur Erfassung der Bewegung der Leitung und
- Fig. 10: ein Ausführungsbeispiel einer aus isolierendem Material bestehenden Leitung mit einer äußeren leitfähigen Beschichtung.

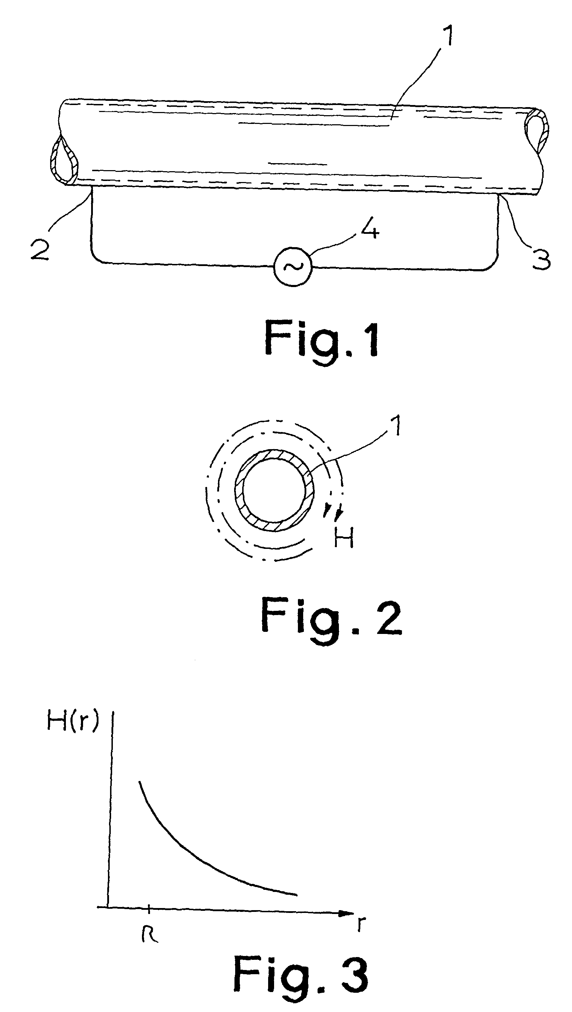

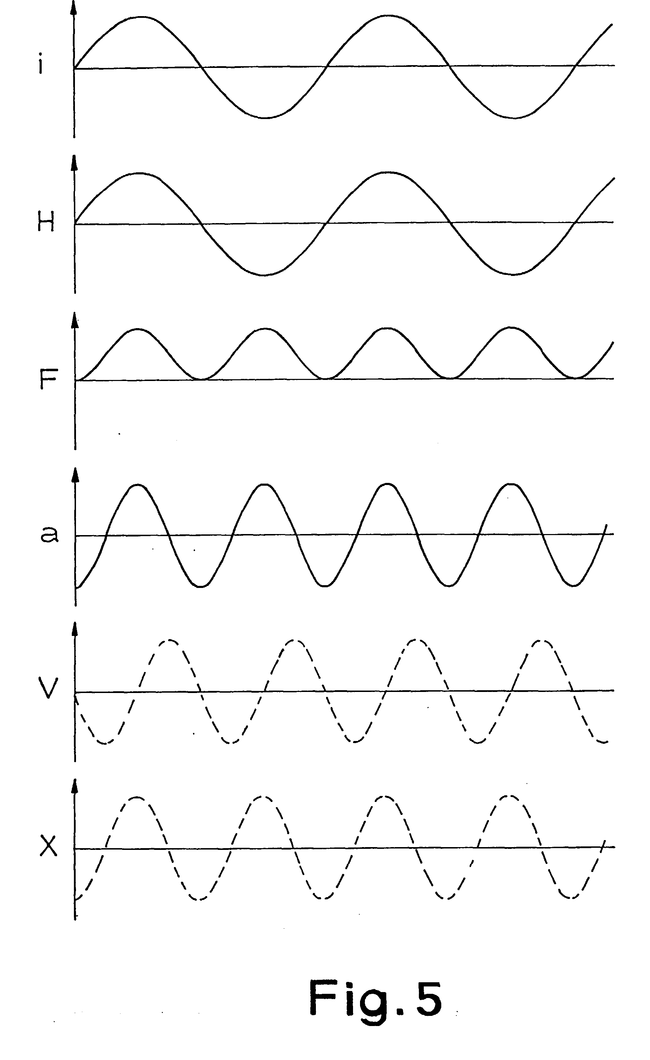

In Fig. 1 ist ein Abschnitt einer ein strömendes Medium führenden Leitung 1 eines erfindungsgemäßen Meßgerätes für strömende Medien, das nach dem Coriolis-Prinzip arbeitet, dargestellt. Der in Fig. 1 dargestellte Abschnitt der Leitung 1 ist an zwei Kontakten 2, 3 mit einer Spannungquelle 4 verbunden. Die Spannungsquelle 4 koppelt einen elektrischen Strom in den zwischen den Kontakten 2, 3 angeordneten Abschnitt der Leitung 1 ein. Dieser elektrische Strom bewirkt, wie in Fig. 2 dargestellt, die Ausbildung eines Magnetfeldes H in der Umgebung der Leitung 1. Die Stärke dieses Magnetfeldes H nimmt, wie in Fig. 3 für hier interessierende Abstände größer als der Radius R der Leitung 1 dargestellt, umgekehrt proportional zum Abstand von der Leitung 1 ab. Das die Leitung 1 umgebende Magnetfeld H ermöglicht es, die Leitung 1 berührungslos zu erregen und ihre Bewegungen berührungslos aufzunehmen. Hierdurch ist vorteilhaft gewährleistet, daß keine zusätzlich an der Leitung 1 angebrachten Massen die Bewegung der Leitung 1 beeinflussen.

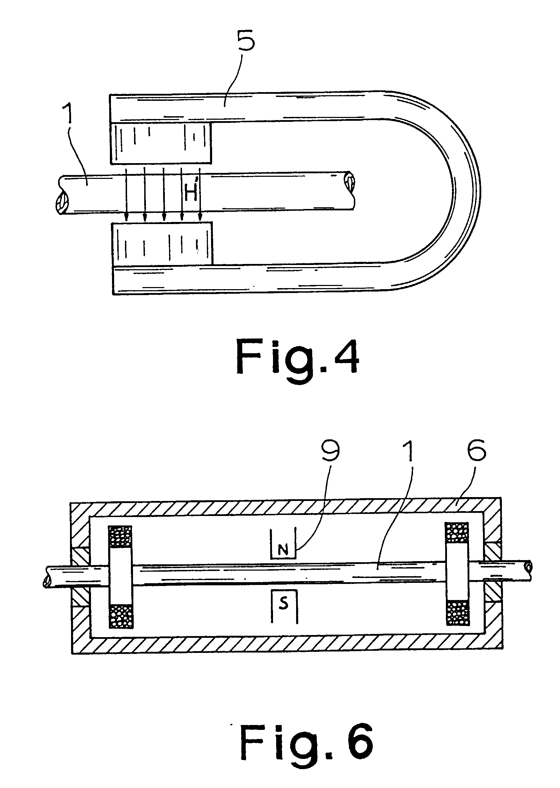

Fig. 4 zeigt einen Permanentmagneten 5 in Hufeisenform, der ein die Leitung 1 zumindest abschnittsweise umgebendes externes Magnetfeld H' zur Verfügung stellt. Da es sich bei dem von dem Permanentmagneten 5 zur Verfügung gestellten externen Magnetfeld H' zwangsläufig um ein Gleichfeld handelt, muß der elektrische Strom durch die Leitung 1 ein Wechselstrom sein. In diesem Fall sorgt die Wechselwirkung zwischen dem von dem Wechselstrom durch die Leitung 1 hervorgerufenen Magnetfeld und dem von dem Permanentmagneten 5 gelieferten externen Magnetfeld für eine Anregung der das strömende Medium führenden Leitung 1. Bei einer Leitung 1 aus Edelstahl von ca. 2 mm Außendurchmesser und einer Wandstärke von ca. 1 mm liefert ein Strom von ca. 2 A in Verbindung mit dem Magnetfeld eines gebräuchlichen Permanentmagneten 5 eine ausreichende Kraft zum Antrieb der Leitung 1 ohne eine nennenswerte Verlustleistung über der Leitung 1.

Wie sich der Wechselstrom1, die magnetische Feldstärke H, die auf die Leitung 1 wirkende Kraft F, die auf die Leitung 1 wirkende Beschleunigung a, die Geschwindigkeit v der Leitung 1 und die Stellung x der Leitung 1 in Abhängigkeit der Zeit ohne Dämpfung der Leitung verhalten ist in Fig. 5 dargestellt. In Fig 5 ist insbesondere der Fall dargestellt, bei dem sowohl das Magnetfeld als Wechselfeld als auch den elektrischen Strom als Wechselstrom bei gleichen Frequenzen ausgebildet ist, der besonders für die Erfassung der Bewegung der Leitung 1 interessant ist. Das Zusammenwirken des Wechselstroms und des Wechselfeldes führen zur Überlagerung einer von der Phasendifferenz zwischen Wechselfeld und Wechselstrom abhängigen Dauerkraft mit einer Kraft der doppelten Frequenz der Wechselfeldfrequenz bzw. der Wechselstromfrequenz.

Da die Spannung der angeregten Leitung 1 einen Anteil gegeninduzierter Spannung aufweist und da im Resonanzbetrieb und bei einer Leitung 1 mit einem hohen Q-Faktor die mechanischen Verlustleistungen in der Leitung 1 sehr gering sind, ist die Spannung über der Leitung 1 ein Maß für die Amplitude der Schwingung der Leitung 1. Somit kann die Spannung über der Leitung 1 beispielsweise als Ist-Wert der Amplitude der Schwingung der Leitung 1 für einen Regelkreis benutzt werden.

In Fig. 6 ist nun ein Massendurchflußmeßgerät dargestellt, bei dem die Enden der Leitung 1 über ein Meßgerätgehäuse 6 und Erde kurzgeschlossen sind. Statt des Meßgerätgehäuses 6 kann selbstverständlich auch eine spezielle leitende Verbindung den Kurzschluß zwischen den Enden der Leitung 1 gewährleisten. Bei dem in Fig. 6 dargestellten Massendurchflußmeßgerät wird der elektrische Strom durch die Leitung 1 nach dem Transformatorprinzip über zwei Ringkerntransformatoren 7, 8 in die Leitung 1 eingekoppelt. Dabei bildet das Meßrohr mit seinen über das Meßgerätgehäuse 6 kurzgeschlossenen Enden die Sekundärwicklung der Ringkerntransformatoren 7, 8. Bei einer solchen Anordnung ergibt sich, wie bekannt ist, die Höhe des elektrischen Stroms durch die Leitung 1 aus der Summe der Produkte aus Wicklungsanzahl und Strom beider Ringkerntransformatoren 7, 8. Der in der Leitung 1 induzierte elektrische Strom ist selbstverständlich ein Wechselstrom. Das von diesen Wechselstrom hervorgerufene Magnetfeld sorgt durch die Wechselwirkung mit dem externen Magnetfeld des in Fig. 6 dargestellten Magneten 9 für die Anregung der Leitung 1. Der Magnet 9 kann sowohl als Permanentmagnet als auch als Elektromagnet ausgebildet sein. Anders als in Fig. 6 dargestellt, reicht auch ein einzelner Ringkerntransformator um einen elektrischen Strom in die Leitung 1 einzukoppeln.

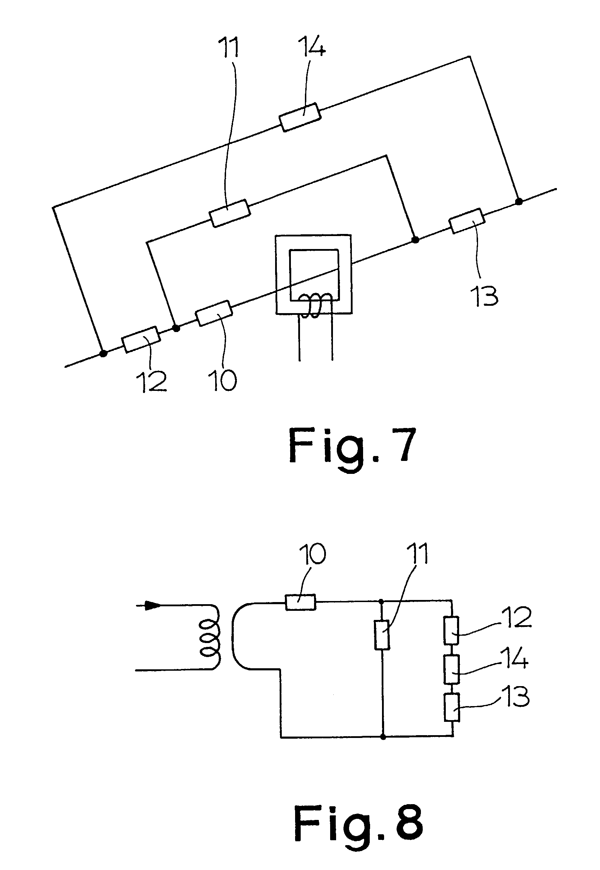

Ohne weitere Maßnahmen ist es nicht zu verhindern, daß der, wie in Fig. 6 dargestellt, in die Leitung 1 eingekoppelte Strom auch über Erde kurzgeschlossen wird. Dies ist in dem Ersatzschaltbild in Fig. 7 dargestellt. In Fig. 7 werden die tatsächlichen Widerstände durch einen Leitungswiderstand 10, einen Meßgerätgehäusewiderstand 11, einen linken Anschlußleitungswiderstand 12, einen rechten Anschlußleitungswiderstand 13 und einen Erdschlußwiderstand 14 dargestellt. Der linke und der rechte Anschlußleitungswiderstand geben den Widerstand von den Enden der Leitung bis auf Erdpotential wieder. Wie aus dem auf die elektrischen Gesichtspunkte reduzierten Ersatzschaltbild in Fig. 8 ersichtlich ist, besteht ein weiterer Vorteil des nach dem Transformatorprinzip in die Leitung 1 eingekoppelten elektrischen Stroms neben der galvanischen Entkoppelung darin, daß der eingekoppelte Strom, im Gegensatz zu der Einkoppelung des Stroms wie in Fig. 1 dargestellt, nahezu unabhängig von den Anschlußleitungswiderständen 12, 13 ist.

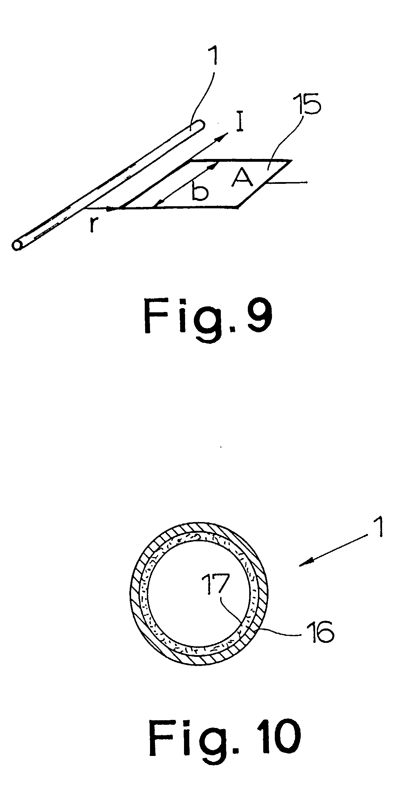

In Fig. 9 ist ein Ausführungsbeispiel einer in der Nähe der Leitung 1 angeordneten Spule 15 mit einer Wicklung dargestellt. Diese Anordnung der Spule 15 ermöglicht es die Bewegung der Leitung 1 durch die in der Spule 15 induzierte Spannung zu erfassen. Die Amplitude des Spulensignals und das Signal/Rausch-Verhältnis einer Spule wird durch die Windungzahl der Spule erhöht. Die Spule 15 ermöglicht ebenso wie andere Magnetfeldsensoren, zum Beispiel Hallsonden, Feldplatten o. ä., die berührungslose Erfassung der Bewegung der Leitung 1. Die Empfindlichkeit der Spule 15 als Meßwertaufnehmer wird dadurch erhöht, daß eine zweite Spule symmetrisch zur Leitung 1 auf der anderen Seite der Leitung 1 angeordnet wird. In diesem Fall verdoppelt sich das Spulensignal. Die Spulensignale liegen bei Strömen I von einigen Ampere durch die Leitung 1, bei einem Abstand r von einigen Millimetern zwischen der Leitung 1 und der Spule 15, bei einer Breite b der Spule von einigen Zentimetern, der Spulenfläche A von einigen Quadratzentimetern und einer Resonanzfrequenz der Leitung 1 im Bereich von einigen 100 Hz pro Windung im Bereich von einigen 10 µV. Bei einer entsprechend hohen Windungszahl von einigen hundert Windungen erhält man also ein Spulensignal das elektronisch sehr gut zu verarbeiten ist. Für das Signal/Rausch-Verhältnis ist im wesentlichen das thermische Rauschen in der Spulenwicklung von Bedeutung. Das thermische Rauschen beträgt bei der beispielhaft beschriebenen Spulenanordnung einige pV. Dies ist auch dann noch ein akzeptabler Wert, wenn die durch die Coriolis-Kräfte verursachte Phasenverschiebung bei 100% des Nennmassendurchflusses durch das Massendurchflußmeßgerät deutlich weniger als 1° beträgt.

Schließlich ist in Fig. 10 eine Leitung 1 dargestellt, die aus einer von außen mit einer Schicht leitfähigen Materials 16 beschichteten Leitung aus isolierendem Material 17 besteht. Eine solche Anordnung gewährleistet es, daß durch das strömende Medium kein elektrischer Strom fließt. Dies ist abhängig vom strömenden Medium, wie bereits Eingangs geschildert, aus galvanischen Gründen vorteilhaft. Als isolierendes Material kommt beispielsweise Glas, Glaskeramik o. ä. in Frage. Das Material für die Beschichtung ist unter verschiedenen Gesichtspunkten auszuwählen. Die wesentlichen Gesichtspunkte sind der spezifische Widerstand, das spezifische Gewicht sowie das E-Modul des Materials. Der spezifische Widerstand sollte nicht zu groß sein, um den Widerstandswert pro Längeneinheit der Leitung 1 nicht unnötig zu erhöhen. Das spezifische Gewicht sollte möglichst gering sein, um die Gesamtmasse der Leitung 1 niedrig zu halten. Das E-Modul spielt eine Rolle bei den Schwingungseigenschaften der zusammengesetzten Leitung 1. Selbstverständlich sind auch technologische Gesichtspunkte in Betracht zu ziehen. Als geeignete Materialien für die Schicht leitfähigen Materials 16 sind beispielsweise zu nennen Aluminium, Kupfer, Silber und Gold. Bei einer Beschichtung der Leitung aus isolierendem Material mit einigen 10 µm Gold erreicht man schon annähernd gleiche Widerstandswerte wie bei Edelstahlleitungen mit einem Gesamtdurchmesser von einigen Millimetern und einer Leitungswandstärke im Bereich von einem Millimeter. Auch bei der in Fig. 10 dargestellten Leitung 1 ist die Einkoppelung des elektrischen Stroms nach dem Transformatorprinzip möglich. Hierbei ergibt sich außerdem die Möglichkeit, elektrische Ströme durch die Anschlußleitungen zu vermeiden. Durch die entsprechende isolierende Ausführung der Anschlußleitungen ist zudem gewährleistet, daß Anschlußleitungen mit unterschiedlichen Potentialen nicht zu störenden elektrischen Strömen durch die Leitung 1 führen.

## Patentansprüche

1. Meßgerät für strömende Medien, das vorzugsweise nach dem Coriolis-Prinzip arbeitet, mit mindestens einer das strömende Medium führenden Leitung (1), mit mindestens einem auf die Leitung (1) einwirkenden Schwingungserzeuger und mit mindestens einem vorzugsweise Coriolis-Kräfte und/oder auf Coriolis-Kräften beruhende Coriolis-Schwingungen erfassenden Meßwertaufnehmer, **dadurch gekennzeichnet,** daß ein von einer Spannungsquelle (4) gelieferter elektrischer Strom zumindest abschnittsweise die Leitung (1) und/oder das strömende Medium durchfließt.

2. Meßgerät nach Anspruch 1, dadurch gekennzeichnet, daß die Leitung (1) über einen von dem durch die Leitung (1) und/oder das strömende Medium fließende elektrischen Strom und ein die Leitung (1) zumindest abschnittsweise umgebendes externes Magnetfeld gebildeten Schwingungserzeuger anregbar ist.

3. Meßgerät nach Anspruch 2, dadurch gekennzeichnet, daß die Amplitude der Schwingung der Leitung (1) aus dem Spannungsabfall über der Leitung (1) ableitbar ist.

4. Meßgerät nach Anspruch 2 oder 3, dadurch gekennzeichnet, daß das externe Magnetfeld einen Wechselfeld ist.

5. Meßgerät nach Anspruch 2 oder 3, dadurch gekennzeichnet, daß das externe Magnetfeld ein Gleichfeld ist.

6. Meßgerät nach einem der Ansprüche 1 bis 4, dadurch gekennzeichnet, daß der elektrische Strom ein Gleichstrom ist.

7. Meßgerät nach einem der Ansprüche 1 bis 5, dadurch gekennzeichnet, daß der elektrische Strom ein Wechselstrom ist.

8. Meßgerät nach Anspruch 7, dadurch gekennzeichnet, daß die Enden der Leitung (1) über ein Meßgerätgehäuse (6) und/oder Erde kurz geschlossen sind und das der elektrische Strom durch die Leitung (1) nach dem Transformatorprinzip in die Leitung (1) einkoppelbar ist.

9. Meßgerät nach einem der Ansprüche 1 bis 8, dadurch gekennzeichnet, daß die Bewegung der Leitung (1) über einen von dem durch die Leitung (1) und/oder das strömende Medium fließenden elektrischen Strom und eine in der Nähe der Leitung (1) angeordnete Spule (15) gebildeten Meßwertaufnehmer erfaßbar ist.

10. Meßgerät nach einem der Ansprüche 1 bis 9, dadurch gekennzeichnet, daß die Leitung (1) aus einem von außen mit einem leitfähigen Material beschichteten isolierenden Material besteht.

## Claims

1. A measuring device for flowing media, which preferably operates based on the Coriolis principle, having at least one line (1) conveying the flowing medium, having at least one vibration generator which acts on the line (1), and having at least one measurement recording device which preferably records Coriolis forces and/or Coriolis vibrations based on Coriolis forces, **characterised in that** an electric current supplied from a voltage source (4) flows at least sectionally through the line (1) and/or through the flowing medium.

2. A measuring device according to claim 1, characterised in that the line (1) can be energised via a vibration generator formed from the electric current flowing through the line (1) and/or through the flowing medium and an external magnetic field which surrounds the line (1) at least sectionally.

3. A measuring device according to claim 2, characterised in that the amplitude of the vibration of the line (1) can be derived from the voltage drop across the line (1).

4. A measuring device according to claims 2 or 3, characterised in that the external magnetic field is an alternating field.

5. A measuring device according to claims 2 or 3, characterised in that the external magnetic field is a constant field.

6. A measuring device according to any one of claims 1 to 4, characterised in that the electric current is a direct current.

7. A measuring device according to any one of claims 1 to 5, characterised in that the electric current is an alternating current.

8. A measuring device according to claim 7, characterised in that the ends of the line (1) are short-circuited via a measuring device housing (6) and/or via earth, and that the electric current through the line (1) can be coupled to the line (1) based on the principle of the transformer.

9. A measuring device according to any one of claims 1 to 8, characterised in that the movement of the line (1) can be detected via a measurement recorder formed by the electric current flowing through the line (1) and/or through the flowing medium and a coil (15) disposed in the vicinity of the line (1).

10. A measuring device according to any one of claims 1 to 9, characterised in that the line (1) consists of an insulating material coated externally with a conductive material.

## Revendications

1. Appareil de mesure pour des milieux qui s'écoulent, qui travaille de préférence conformément au principe de Coriolis, comprenant au moins un conduit (1) guidant le milieu qui s'écoule, au moins un générateur d'oscillations agissant sur le conduit (1) et au moins un transducteur enregistrant de préférence des forces de Coriolis et/ou des oscillations de Coriolis s'appuyant sur des forces de Coriolis, caractérisé en ce qu'un courant électrique fourni par une source de tension (4) circule au moins partiellement à travers le conduit (1) et/ou à travers le milieu qui s'écoule.

2. Appareil de mesure selon la revendication 1, caractérisé en ce que le conduit (1) peut être excité via un générateur d'oscillations formé par le courant électrique circulant à travers le conduit (1) et/ou à travers le milieu qui s'écoule, et par un champ magnétique externe entourant au moins partiellement le conduit (1).

3. Appareil de mesure selon la revendication 2, caractérisé en ce que l'amplitude de l'oscillation du conduit (1) peut être dérivée à partir de la chute de tension s'exerçant via le conduit (1).

4. Appareil de mesure selon la revendication 2 ou 3, caractérisé en ce que le champ magnétique externe est un champ alternatif.

5. Appareil de mesure selon la revendication 2 ou 3, caractérisé en ce que le champ magnétique externe est un champ continu.

6. Appareil de mesure selon l'une quelconque des revendications 1 à 4, caractérisé en ce que le courant électrique est un courant continu.

7. Appareil de mesure selon l'une quelconque des revendications 1 à 5, caractérisé en ce que le courant électrique est un courant alternatif.

8. Appareil de mesure selon la revendication 7, caractérisé en ce que les extrémités du conduit (1) sont mises en court-circuit via un boîtier (6) de l'appareil de mesure et/ou via la terre, et en ce que le courant électrique circulant à travers le conduit (1) peut être alimenté dans le conduit (1) conformément au principe utilisant un transformateur.

9. Appareil de mesure selon l'une quelconque des revendications 1 à 8, caractérisé en ce que le moùvement du conduit (1) peut être enregistré via un transducteur formé par le courant électrique circulant à travers le conduit (1) et/ou à travers le milieu qui s'écoule, et par une bobine (15) disposée à proximité du conduit (1).

10. Dispositif de mesure selon l'une quelconque des revendications 1 à 9, caractérisé en ce que le conduit (1) est constitué par une matière isolante enduite de l'extérieur d'une matière conductrice.
